# DEMANDE DE BREVET EUROPEEN

(11) **EP 0 972 746 A1**
(43) Date de publication de la demande: **19.01.2000**
(21) Numéro de dépôt: 99401617.8
(22) Date de dépôt: 29.06.1999
(51) Int. Cl.: C01B 17/76

(54) **Procédé et dispositif de production d'acide sulfurique**

(30) Priorité: 17.07.1998 FR 9809132
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Arpentinier, Philippe, 75321 Paris Cedex 07 (FR); Dumont, Marie-Noelle, c/o L'université de Liège, 4000 Liège (BE); Maréchal François, c/o L'université de Liège, 4000 Liège (BE); Kalitventzeff, Boris c/o L'université de Liège, 4000 Liège (BE)
(74) Mandataire: Vesin, Jacques

(57) **Abrégé**

La présente invention concerne un procédé et un dispositif de production d'acide sulfurique. Ledit procédé, du type procédé de contact, comprend :
- une première étape de production de dioxyde de soufre à partir d'une matière première soufrée et d'un comburant;
- une seconde étape d'oxydation catalytique dudit dioxyde de soufre en trioxyde de soufre dans un convertisseur catalytique (20' ; 60') alimenté en oxygène ;
- une troisième étape d'obtention d'acide sulfurique à partir dudit trioxyde de soufre, ladite troisième étape produisant, outre ledit acide sulfurique, des gaz de rejet.

De façon caractéristique, il est mis en oeuvre avec recyclage d'une partie desdits gaz de rejet à titre d'au moins une fraction dudit comburant utilisé lors de ladite première étape de production de dioxyde de soufre.

## Description

La présente invention concerne un procédé et un dispositif de production d'acide sulfurique. Ladite invention propose plus précisément un perfectionnement aux procédés et dispositifs de production d'acide sulfurique de l'art antérieur.

Lesdits procédés de l'art antérieur, connus de l'homme de l'art, sont des procédés de contact dits secs ou dits humides.

Ils comprennent, dans une première étape, la production de dioxyde de soufre à partir d'une matière première soufrée. Ladite première étape consiste, notamment, en la combustion de soufre élémentaire, le grillage de pyrites, la combustion de minerais sulfurés de métaux non ferreux, la décomposition de sulfates ou d'acides résiduaires où encore la combustion de combustibles fossiles sulfureux ou de gaz chargés en hydrogène sulfuré. Les unités de production de dioxyde de soufre sont, à ce jour, alimentées en air, qui doit être successivement, dans le cas des procédés dits secs (c'est-à-dire utilisant comme matière première, le soufre élémentaire, les pyrites et les minerais sulfurés de métaux non ferreux) filtré, séché et dévésiculé avant d'être mis à réagir avec la matière première soufrée.

La seconde étape consiste à traiter le dioxyde de soufre produit dans un convertisseur catalytique de façon à l'oxyder en trioxyde de soufre. Ledit dioxyde de soufre est, généralement, avant son introduction dans ledit convertisseur catalytique, lavé pour être débarrassé d'au moins une partie des impuretés dont il est chargé. Le convertisseur est en général un convertisseur à plusieurs étages comportant, le plus souvent, trois ou quatre lits catalytiques. Le catalyseur le plus couramment utilisé dans les lits du convertisseur est constitué d'un support en alumine sur lequel du pentoxyde de vanadium a été déposé. Ce catalyseur est généralement utilisé sous la forme d'extrudés ou d'anneaux. La réaction d'oxydation du dioxyde de soufre en trioxyde de soufre se déroule dans un film liquide à la surface du support catalytique. De façon classique, il n'y a pas d'injection d'oxygène dans le convertisseur. C'est l'oxygène de l'air, non utilisé dans la première étape, qui assure l'oxydation dudit dioxyde de soufre en trioxyde de soufre. Il a toutefois été décrit des procédés où l'on prélève, sur le circuit d'alimentation en air de l'unité de production du dioxyde de soufre, de l'air, pour l'injecter dans le convertisseur catalytique.

Le trioxyde de soufre ainsi produit peut ensuite être transformé en acide sulfurique suivant deux méthodes. La première, utilisable à l'issue d'un procédé de contact dit sec, c'est-à-dire utilisant des matières premières telles que le soufre élémentaire, les pyrites et les minerais sulfurés de métaux non ferreux, consiste à absorber ledit trioxyde de soufre dans de l'eau ou de l'acide sulfurique. La seconde méthode est utilisée lorsque la matière première est constituée d'acides résiduaires, de sulfates, de gaz chargés en hydrogène sulfuré ou de combustibles fossiles sulfureux, c'est-à-dire dans le cas des procédés de contact dits humides, et consiste à condenser en partie les gaz de sortie du convertisseur.

A l'issue de la phase d'absorption ou de condensation, les gaz de rejet contiennent un certain pourcentage de dioxyde de soufre. Ledit dioxyde de soufre provient de la conversion incomplète de celui-ci en trioxyde de soufre, dans le convertisseur catalytique. Le dioxyde de soufre étant une source de pollution, lesdits gaz de rejet doivent généralement être traités avant d'être rejetés dans l'atmosphère. Dans la plupart des pays, la quantité de dioxyde de soufre qu'il est possible de rejeter dans l'atmosphère est généralement limitée de 2,6 kg à 13 kg de dioxyde de soufre par tonne d'acide sulfurique produite, selon les caractéristiques du procédé mis en oeuvre. Le traitement de ces gaz de rejet requiert un investissement supplémentaire conséquent qui augmente le coût global du procédé et de l'installation.

Diverses solutions ont été proposées pour diminuer la teneur en dioxyde de soufre desdits gaz de rejet, pour augmenter en fait le taux de conversion dudit dioxyde de soufre en trioxyde de soufre au niveau du convertisseur catalytique.

Dans le cas où le trioxyde de soufre est absorbé, il est avantageux de faire intervenir une colonne d'absorption ou tour d'absorption intermédiaire dans laquelle on fait passer les gaz provenant d'un étage intermédiaire du convertisseur (ladite colonne intermédiaire est en général placée après le deuxième, troisième voire quatrième lit catalytique du convertisseur). Le trioxyde de soufre contenu dans ces gaz est absorbé au moins en partie dans cette colonne d'absorption intermédiaire ; les gaz étant ensuite réinjectés au niveau de l'étage suivant du convertisseur. Dans ledit convertisseur, au niveau de l'étage de réinjection de ces gaz, contenant peu ou pas de trioxyde de soufre, l'équilibre thermodynamique de la réaction est déplacé vers la formation de trioxyde de soufre, ce qui augmente le taux de conversion du dioxyde de soufre en trioxyde de soufre.

Cette méthode dite de double absorption, par opposition à la méthode dite de simple absorption qui ne comprend pas l'utilisation de la colonne d'absorption intermédiaire, requiert néanmoins, pour sa mise en oeuvre, un investissement assez lourd. Il faut en effet ajouter à l'installation existante, une nouvelle colonne d'absorption (ladite colonne intermédiaire), un ensemble d'équipements de circulation et de refroidissement de l'acide et des gaz, et un système de dévésiculage des gaz qui quittent ladite colonne d'absorption intermédiaire et sont réinjectés dans le convertisseur.

Une autre solution en vue d'améliorer la conversion du dioxyde de soufre en trioxyde de soufre a été exposée dans la demande de brevet FR-A- 2 386 479. Cette solution consiste à injecter de l'oxygène dans le convertisseur, au niveau du deuxième lit catalytique et/ou au niveau des lits suivants. L'équilibre thermodynamique de la réaction d'oxydation est alors déplacé vers la formation de trioxyde de soufre et la vitesse d'oxydation du dioxyde de soufre en trioxyde de soufre est augmentée. Une telle injection d'oxygène n'a pas sciemment été prévue au niveau du premier lit catalytique dans la mesure où l'on craignait qu'elle entraîne une trop forte augmentation de la température et donc une détérioration du catalyseur intervenant.

Néanmoins, ce procédé ne permet pas d'atteindre dans tous les cas le taux de conversion imposé du dioxyde de soufre en trioxyde de soufre qui est actuellement de 99,6%. De plus, d'un point de vue économique, la rentabilité de ce procédé dépend essentiellement du prix de l'oxygène. Aussi, selon le prix de l'oxygène, la première solution, c'est-à-dire la transformation d'une installation simple absorption en une installation double absorption s'avère parfois plus rentable, à taux de conversion égal visé.

Une amélioration à cette autre solution a été proposée par la Demanderesse, dans la demande de brevet FR-A-2 703 987. Elle consiste à injecter de l'oxygène au niveau du deuxième étage et/ou d'un étage suivant du convertisseur catalytique, en optimisant la température d'introduction des gaz au niveau d'au moins un des étages suivant celui où ledit oxygène est injecté, c'est-à-dire, en abaissant simultanément la température d'introduction de ces gaz, de 3°C à 50°C par rapport à ce qu'elle serait dans la pratique courante, pour une même production d'acide sulfurique, sans injection d'oxygène.

La Demanderesse s'est intéressée à ces procédés plus ou moins performants de l'art antérieur et a notamment constaté que la grande majorité de l'oxygène introduit au niveau du convertisseur, selon les technologies décrites dans FR-A-2 386 479 et FR-A-2 703 987, est en fait rejetée à l'atmosphère, dans les gaz de rejet.

La Demanderesse s'est attachée à concevoir un nouveau procédé, économiquement rentable, optimisé tant du point de vue de la teneur en dioxyde de soufre des gaz de rejet produits que du point de vue de l'utilisation de l'oxygène intervenant dans le convertisseur catalytique.

La Demanderesse, confrontée à ce problème technique, a développé un nouveau procédé de production d'acide sulfurique, qui comprend,
- une première étape de production de dioxyde de soufre à partir d'une matière première soufrée et d'un comburant ;
- une seconde étape d'oxydation catalytique dudit dioxyde de soufre en trioxyde de soufre dans un convertisseur catalytique alimenté en oxygène et/ou en air enrichi en oxygène ; et
- une troisième étape d'obtention d'acide sulfurique à partir dudit trioxyde de soufre, ladite troisième étape produisant, outre ledit acide sulfurique, des gaz de rejet.

Selon l'invention on recycle au moins une partie desdits gaz de rejet dans le comburant utilisé lors de ladite première étape de production de dioxyde de soufre.

Le procédé de l'invention est mis en oeuvre avec le même type de matières premières que celles utilisées dans les procédés de l'art antérieur, et qui sont bien connues de l'homme de métier. Il comporte deux principales variantes :
- selon la première, l'acide sulfurique est obtenu à partir du trioxyde de soufre par absorption et le procédé selon cette variante est donc un procédé de contact dit sec ;
- selon la seconde, l'acide sulfurique est obtenu à partir du trioxyde de soufre par condensation et le procédé selon cette invention est donc un procédé de contact dit humide.

Dans ces deux cas, il est mis en oeuvre avec injection d'oxygène dans le convertisseur catalytique qui comprend au moins deux étages (deux lits catalytiques).

Avantageusement, l'oxygène est injecté dans le premier étage (lit catalytique) du convertisseur. Ceci s'est révélé en fait possible, sans altération du catalyseur du premier lit, du fait de la dilution des gaz traversant les lits catalytiques et s'est révélé particulièrement avantageux dans le cadre de la mise en oeuvre du procédé de l'invention. Selon une variante de l'invention, on peut également injecter de l'oxygène dans au moins un des lits suivants.

De façon caractéristique, le dioxyde de soufre issu de la première étape est obtenu à partir des matières premières soufrées, par action sur celles-ci, d'un comburant qui comporte au moins une partie des gaz de rejet recyclés.

Selon l'invention, le terme comburant utilisé dans la première étape est tout type de comburant utilisé par l'homme de métier et notamment les comburants du type air, air enrichi en oxygène et oxygène (avec la signification du terme oxygène étant définie ci-après) : ce comburant comportera donc de préférence au moins 20% environ en volume d'oxygène, de préférence entre 21% et 100% en volume d'oxygène, et notamment de l'oxygène dit industriellement pur.

Le terme O2 signifie en règle générale un gaz pur a un mélange de gaz contenant plus d'environ 88% en volume d'oxygène pur et de préférence entre 90% et 100% d'oxygène pur, incluant notamment l'oxygène obtenu par voie cryogénique à haute pureté ou à basse pureté ainsi que l'oxygène obtenu par adsorption dans des appareils dits VSA (" Vacuum Switch Adsorption) appareils qui adsorbe essentiellement l'azote de l'air et fournissant un flux de gaz comportant de préférence de 88%vol à 95%vol d'oxygène, de 3% à 5% vol d'argon et de 0,5% à 9% vol d'azote.

Le recyclage des effluents gazeux (issus de la tour d'adsorption finale de la troisième étape vers l'unité de production de dioxyde de soufre de la première étape (four à soufre, four à grillage de pyrite, etc...) se fait en général, selon l'invention, dans les conditions suivantes :

La proportion de gaz recyclés est fonction de la pureté de l'oxygène utilisé dans le procédé, et telle que définie ci-dessus. Dans le cas du procédé selon l'invention, on préférera une pureté d'oxygène comprise entre 90% et 99% moles, préférentiellement entre 92% et 95% moles. Le complément à l'oxygène pourra être constitué d'un ou plusieurs autres gaz (à condition que ceux-ci n'aient pas d'action propres sur le procédé de formation de l'acide sulfurique et de ses intermédiaires), de préférence un gaz inerte et notamment l'argon et/ou l'azote.

La fraction de gaz de rejets recyclée sera alors comprise entre environ 50% vol et 99.5%vol, de préférence entre 90% et 99,5%vol et plus préférentiellement entre 95% et 99,5%, l'objectif étant de recycler le maximum de gaz de rejets afin de limiter la quantité d'oxygène rejetée dans l'atmosphère.

La teneur en oxygène dans 1 es gaz de rejets recyclés dans la première étape du procédé correspond à l'excès d'oxygène par rapport à la stoéchiométrie de la réaction mise en oeuvre dans la première étape du procédé (pour un débit d'oxygène constant alimentant la seconde étape de ce procédé, bien entendu). Cet excès d'oxygène sera selon l'invention, compris entre 10% et 100% de la quantité d'oxygène nécessaire pour obtenir une réaction dans des conditions stoéchiométriques. De préférence, on aura un excès d'oxygène compris entre 30% et 90% et de façon encore plus préférentielle (assurant un bon compris technique et économique) entre 40% et 70%. En conséquence, la teneur en oxygène correspondante dans le flux de gaz de rejet recyclé sera respectivement comprise entre environ 70% et 15% en moles, de préférence entre 30% et 17% en moles et plus préférentiellement entre 25% et 18% en moles.

La teneur en autres gaz, en mélange avec les molécules d'oxygène, de préférence en gaz inerte (essentiellement azote et/ou argon) permet de contrôler la température de sortie du four (four à soufre, four de grillage, etc...) dans lequel le dioxyde de soufre est formé au cours de la première étape du procédé. Cette température sera d'une manière générale comprise entre 850°C et 1700°C, de préférence entre 900°C et 1400°C et plus préférentiellement entre 950°C et 1200°C. Pour obtenir ces températures de gaz, on utilisera des gaz de rejets dont la teneur on azote (lorsqu'il n'y a que des molécules d'azote entre les molécules d'oxygène) sera comprise respectivement entre 30% et 85% mol, de préférence 70% et 83% mol et plus préférentiellement entre 75% et 82% mol.

La température et la pression du flux de gaz recyclés ne sont pas d'une manière générale des paramètres opératoires ayant une importance déterminante sur le procédé selon l'invention. Ainsi la température des gaz de rejets est imposée par la tour d'absorption finale et dans la majorité des procédés industriels, la température de ces gaz est comprise entre environ 70°C et 80°C ce qui est une température de gaz tout à fait acceptable pour être directement réinjectés dans la première étape du procédé. La pression des gaz de rejets en général comprise entre environ 1,05 bar absolu et 1,30 bar absolu est également acceptable pour être utilisée telle qu'elle.

Le recyclage de ces gaz effluents présente en outre un certain nombre d'avantages:

Un tel recyclage permet de diminuer, de façon notable, la quantité de dioxyde de soufre rejetée à l'atmosphère, compte tenu de la forte diminution du débit de gaz de rejet effectivement rejeté à l'atmosphère.

Un tel recyclage permet également d'augmenter considérablement le taux de conversion global du soufre en trioxyde de soufre dans le procédé de contact. En effet, la Demanderesse a constaté que le procédé de l'invention permet d'obtenir, lorsqu'il est mis en oeuvre dans une installation fonctionnant en simple absorption, un taux de conversion global du soufre comparable à celui pouvant être obtenu dans une installation similaire fonctionnant en double absorption.

Le recyclage selon l'invention permet également, dans le cas des procédés de contact dits secs, de s'affranchir de l'étape de séchage des gaz (comburants), avant leur utilisation dans la première étape. En effet, comme cela a été dit précédemment, l'air introduit lors de ladite première étape doit être séché, dans le cas des procédés de contact dits secs. Les gaz recyclés selon le procédé de la présente invention proviennent de la tour d'absorption, où ils ont été lavés par une solution d'acide sulfurique concentrée et sont donc secs. Ils peuvent, par conséquent être utilisés pour la production de dioxyde de soufre, sans séchage complémentaire.

Le recyclage permet, par ailleurs, une économie notable sur la compression des gaz utilisés à titre de comburant. En effet, selon l'art antérieur, l'air doit être comprimé jusqu'à environ 1,5 bar, avant d'être introduit au niveau de l'unité de production de dioxyde de soufre. Cette compression est destinée à compenser les pertes de charge. Pour compenser les pertes de charge, moindres dans le contexte du procédé de l'invention où l'installation est simplifiée, on fournit donc moins d'énergie et, d'autant moins, qu'en sortie de procédé, les gaz de rejet sont, généralement, encore à une pression d'environ 1,1 bar.

Un autre avantage du procédé selon la présente invention est la diminution de la quantité de catalyseur nécessaire. En effet, comme ceci sera expliqué plus loin, le procédé selon la présente invention permet de réduire d'environ 60% la quantité de catalyseur utilisé ; ce qui peut se traduire, par exemple, par la diminution du nombre d'étages du convertisseur intervenant.

Le procédé de la présente invention permet donc de faire des économies, à performances égales voire meilleures, aussi bien en terme d'investissements puisqu'il ne nécessite pas l'installation d'une colonne d'absorption intermédiaire (il a été dit plus haut qu'une installation fonctionnant en simple absorption selon le procédé de la présente invention permet d'obtenir des taux de conversion globaux équivalents à ceux obtenus avec une installation fonctionnant en double absorption selon le procédé de l'art antérieur) qu'en terme de fonctionnement, puisqu'il nécessite une quantité moindre de catalyseur.

Sur une installation classique existante, la mise en oeuvre du procédé selon la présente invention ne nécessite que peu d'investissements, et des changements minimes de ladite installation. Il est seulement nécessaire de prévoir l'introduction d'oxygène au niveau du convertisseur catalytique, pour les installations ne fonctionnant pas encore avec injection d'oxygène (ou, pour les installations fonctionnant déjà avec injection d'oxygène, de prévoir, éventuellement, avantageusement, une modification au niveau de ladite introduction d'oxygène), et de prévoir un circuit adéquat pour le recyclage d'une partie des gaz de rejet ; le circuit d'alimentation en comburant de l'unité de production de dioxyde de soufre se trouvant alors simplifié.

Ainsi, envisager la transformation d'une installation classique en installation fonctionnant selon le procédé de la présente invention peut s'avérer particulièrement opportun dans le cas d'une installation classique dont le catalyseur n'est plus suffisamment actif et/ou dont la colonne intermédiaire d'absorption, si elle existe, doit être changée. En effet, modifier ainsi une installation classique en installation fonctionnant selon le procédé de la présente invention permet de ne pas renouveler la totalité du catalyseur, ce qui représente une économie conséquente, et/ou de ne pas investir dans une nouvelle colonne d'absorption intermédiaire.

On pouvait craindre que le recyclage de gaz de rejet, selon l'invention, provoque, dans l'installation, et notamment dans le convertisseur, une accumulation des impuretés contenues dans lesdits gaz de rejet (essentiellement du dioxyde de soufre et des oxydes d'azote), ce qui pouvait à priori nuire au bon fonctionnement du procédé. Néanmoins, la Demanderesse a constaté que les teneurs en impuretés atteintes restent sans conséquence vis à vis dudit fonctionnement du procédé.

Selon l'invention, on recycle donc au moins une partie des gaz de rejet dans le du comburant utilisé dans la première étape de production de dioxyde de soufre.

Selon une première variante de mise en oeuvre, il est en effet tout à fait possible, dans le cadre du procédé de l'invention, d'ajouter aux gaz recyclés, un autre gaz ou un mélange de gaz. Un tel ajustement de la composition dudit comburant, au vu de la composition des gaz de rejet produits, peut se révéler indispensable pour alimenter l'unité de production de dioxyde de soufre, en un comburant convenable.

Selon une seconde variante de mise en oeuvre, la totalité du comburant utilisé dans la première étape de production de dioxyde de soufre est constituée de la partie recyclée des gaz de rejet. Ladite variante est particulièrement préférée dans la mesure où elle simplifie grandement la mise en oeuvre du procédé, où elle ne nécessite notamment qu'un seul compresseur. Ladite variante préférée ne peut évidemment être mise en oeuvre que si la composition des gaz de rejet est adéquate pour qu'ils conviennent, à titre de comburant, dans la première étape. Ladite composition des gaz de rejet est évidemment liée à la composition et à la quantité d'oxygène introduit dans le convertisseur catalytique, au cours de la seconde étape du procédé.

A ce jour, les unités de production de dioxyde de soufre utilisent l'air à titre de comburant (1^{ère} étape du procédé) et, pour la mise en oeuvre de la variante préférée du procédé de l'invention (variante préférée selon laquelle la totalité du comburant utilisé est constituée de gaz de rejet) dans une installation comprenant une telle unité, on veillera donc à ce que les gaz de rejet aient une composition voisine de celle de l'air. La Demanderesse a établi que ce résultat peut être atteint sans difficulté particulière, notamment, lorsque le convertisseur catalytique est alimenté avec de l'oxygène contenant de 1% à 10% de gaz inerte, azote et/ou argon essentiellement, en volume et plus particulièrement lorsqu'il est alimenté avec de l'oxygène contenant de 4 % à 10 % de gaz inerte (azote et/ou argon), en volume.

Ainsi, dans le cadre de la seconde variante préférée de mise en oeuvre du procédé de l'invention, ledit convertisseur catalytique est avantageusement alimenté en un oxygène qui renferme de telles teneurs en gaz inerte en particulier de l'oxygène produit par voie cryogénique à basse pureté ou par adsorption avec un appareil de type VSA, tel que défini ci-avant..

Il n'est toutefois pas exclu, du cadre de la présente invention, de mettre en oeuvre la première variante indiquée ci-dessus (selon laquelle au moins un gaz est ajouté aux gaz de rejet recyclés), avec intervention d'un tel oxygène dans le convertisseur. Par ailleurs, si l'unité de production de dioxyde de soufre est adaptée pour fonctionner avec un comburant plus riche en oxygène que l'air (air enrichi en oxygène, oxygène plus ou moins pur tels que définis ci-avant), le procédé de l'invention, et notamment la deuxième variante sont utilisés. On obtient des gaz de rejet plus riches en oxygène en réglant l'injection d'oxygène (débit, pureté) dans le convertisseur catalytique.

L'homme du métier saura adapter le procédé selon l'invention en fonction des indications données ci-avant.

Avantageusement, la partie recyclée des gaz de rejet est dévésiculée avant son utilisation dans la première étape de production de dioxyde de soufre. Le dévésiculage permet, en éliminant les gouttelettes de liquide des gaz, de limiter voire d'éviter tout risque de corrosion de l'installation et en particulier du convertisseur. La mise en oeuvre d'une étape de dévésiculage est en soi bien connue par l'homme de métier.

Le procédé de l'invention peut être avantageusement mis en oeuvre avec une matière première soufrée choisie parmi le soufre élémentaire, les pyrites et les minerais sulfurés de métaux non ferreux. Dans un tel contexte, tout comme dans les procédés de l'art antérieur, au cours de la troisième étape, l'acide sulfurique est obtenu par absorption.

Le procédé de l'invention peut tout aussi bien être mis en oeuvre avec une matière première soufrée choisie parmi les gaz chargés en hydrogène sulfuré, les acides résiduaires, les gaz de combustion de combustibles fossiles sulfureux et les sulfates. Dans un tel contexte, tout comme dans les procédés de l'art antérieur, au cours de la troisième étape, l'acide sulfurique est obtenu par condensation.

Il en découle donc que le procédé selon la présente invention peut être aisément mis en oeuvre sur des installations existantes de production d'acide sulfurique, convenant aussi bien pour la mise en oeuvre des procédés de contact dits humides que pour la mise en oeuvre des procédés de contact dits secs.

Dans le cas des procédés de contact utilisant des matières premières contenant des impuretés et susceptibles de former du dioxyde de carbone (telles les pyrites, les minerais sulfurés de métaux non ferreux, les sulfates, les acides résiduaires, les gaz chargés en hydrogène sulfuré et les gaz de combustion de combustibles fossiles sulfureux), le gaz issu de la première étape, chargé en dioxyde de soufre est généralement lavé, une ou plusieurs fois, avant son introduction dans le convertisseur catalytique de manière connue en soi : selon une variante de l'invention, partie recyclée des gaz de rejet est avantageusement décarbonatée avant son utilisation dans la première étape. La décarbonatation évite l'accumulation du dioxyde de carbone dans l'installation, qui risquerait de dégrader l'activité du catalyseur. Cette étape de décarbonation est mise en oeuvre par des procédés bien connus en soi de l'homme de métier, tels que l'absorption chimique par la monoéthanolamine

Dans l'hypothèse où une décarbonatation est mise en oeuvre, la partie recyclée des gaz de rejet est, avantageusement, tout d'abord dévésiculée puis ensuite décarbonatée, avant son utilisation dans la première étape.

Selon une variante de l'invention, une partie desdits gaz de rejet est recyclée vers une autre étape du procédé. En effet, il est particulièrement avantageux lorsque les matières premières soufrées sont chargées en impuretés (cas des matières premières soufrées autres que le soufre), de recycler également une partie desdits gaz de rejet à l'entrée du convertisseur catalytique. Ce deuxième recyclage en aval du premier permet notamment de diminuer le volume de gaz à laver.

Les premier et deuxième recyclages peuvent être mis en oeuvre séparément ou simultanément. Selon une variante de réalisation, on prévoit un seul circuit de recyclage vers la première étape de production de dioxyde de soufre, ce circuit comportant une dérivation vers l'entrée dudit convertisseur catalytique. Dans ce contexte, lorsque les opérations de dévésiculage voire de dévésiculage et de décarbonation sont mises en oeuvre sur les gaz de rejet recyclés, elles le sont de préférence en amont de ladite dérivation (de sorte que les gaz introduits directement dans le convertisseur sont séchés et/ou décarbonatés).

Le convertisseur catalytique pourra comporter au moins deux étages (lits catalytiques), et, entre chaque étage dudit convertisseur, les gaz réactionnels seront, avant leur introduction dans l'étage suivant, refroidis jusqu'à une température qui est de 3°C à 50°C inférieure à la température obtenues sans introduction d'oxygène, pour une même production d'acide sulfurique. Pour plus de détails, on se reportera à la demande de brevet FR-A-2 703 987.

Le procédé selon l'invention, permet notamment d'obtenir un très bon taux de conversion du soufre en trioxyde de soufre dans un convertisseur catalytique qui ne comporte que deux étages ; ce qui autorise une économie substantielle de catalyseur. On pourra répartir la quantité moindre de catalyseur utile dans plus de deux lits catalytiques. La Demanderesse a également montré que des taux de conversion ( du soufre en trioxyde de soufre) similaires peuvent être obtenus dans une installation fonctionnant selon le procédé de l'invention, avec un convertisseur à deux étages et une seule colonne d'absorption et dans une installation fonctionnant selon le perfectionnement de la demande de brevet FR-A-2 386 479, avec un convertisseur à quatre étages associé à une colonne d'absorption intermédiaire (selon la méthode de double absorption).

Un autre aspect de la présente invention concerne un dispositif convenant pour la production d'acide sulfurique selon le nouveau procédé décrit ci-dessus. Ledit dispositif comprend:
- une unité de production de dioxyde de soufre à partir d'une matière première soufrée et d'un comburant ;
- un convertisseur catalytique, dudit dioxyde de soufre en trioxyde de soufre, équipé de moyens pour son alimentation en oxygène (lesdits moyens, assurant avantageusement ladite alimentation en oxygène, au niveau d'au moins le premier étage dudit convertisseur catalytique) ; et
- une unité de préparation dudit acide sulfurique à partir dudit trioxyde de soufre.

Ledit dispositif comprend, en outre, de façon caractéristique, des moyens pour recycler une partie des gaz de rejet au sortir de l'unité de préparation d'acide sulfurique, vers l'unité de production de dioxyde de soufre.

Les moyens de recyclage d'une partie desdits gaz de rejet sont généralement associés à une unité de dévésiculage desdits gaz et/ou, à une unité de décarbonatation desdits gaz ; l'unité de décarbonatation intervenant de préférence en aval de l'unité de dévésiculage.

Lesdits moyens de recyclage d'une partie des gaz de rejet vers l'unité de production de dioxyde de soufre peuvent comprendre un circuit de dérivation qui permet de recycler aussi des gaz de rejet, directement, à l'entrée du convertisseur catalytique. L'intérêt d'un tel circuit de dérivation a été précisé ci-dessus.

Généralement, de façon classique, l'unité de préparation d'acide sulfurique à partir du trioxyde de soufre, consiste en une unité d'absorption ou une unité de condensation.

On considère maintenant l'invention en référence aux figures annexées sur lesquelles :
- la figure 1 illustre de façon schématique un procédé de contact dit sec selon l'art antérieur, avec introduction d'oxygène au niveau du convertisseur, mis en oeuvre avec du soufre élémentaire comme matière première soufrée ;
- la figure 2 illustre de façon schématique le perfectionnement selon l'invention appliqué au procédé de l'art antérieur illustré sur la figure 1 ;
- la figure 3 illustre de façon schématique un procédé de contact dit sec selon l'art antérieur, avec introduction d'oxygène au niveau du convertisseur, mis en oeuvre avec de la pyrite comme matière première soufrée ;
- la figure 4 illustre de façon schématique le perfectionnement selon l'invention appliqué au procédé de l'art antérieur illustré sur la figure 3.

Lesdites figures sont des "flow-sheet" des différents procédés. Les installations associées aux procédés schématisés fonctionnent en régime permanent et de façon continue.

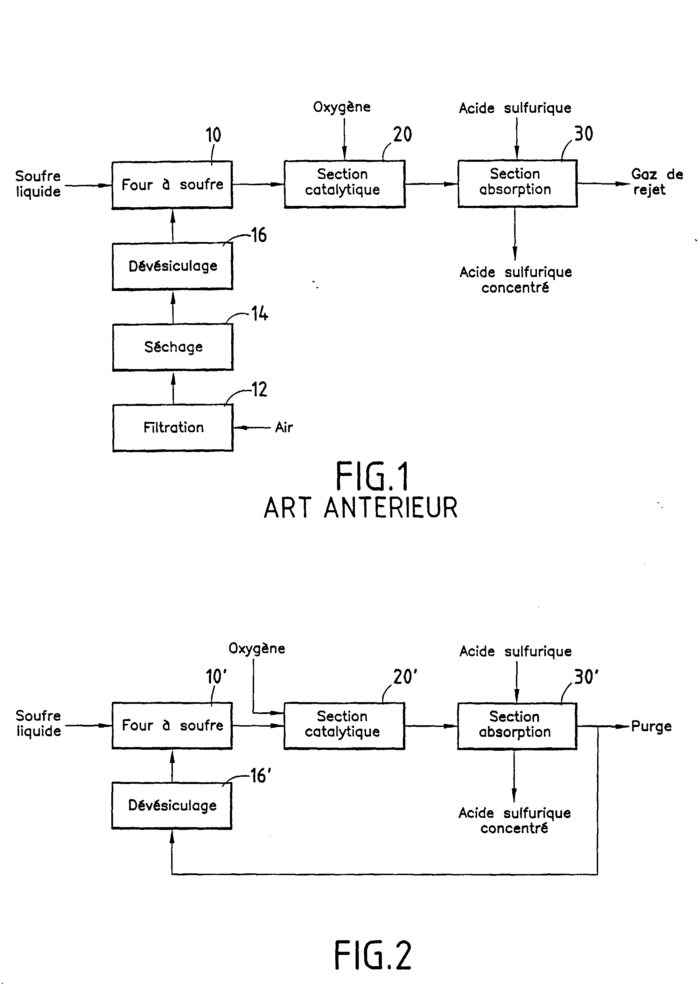

La figure 1 illustre un procédé de l'art antérieur perfectionné selon l'objet de la demande de brevet FR-A-2 386 479 et utilisant du soufre élémentaire comme matière première soufrée dans sa première étape.

Le soufre élémentaire est brûlé dans un four à soufre 10 de façon à produire du dioxyde de soufre. Le four à soufre 10 est alimenté en air qui doit subir successivement, une étape de filtration 12, une étape de séchage 14 et une étape de dévésiculage 16 avant d'être introduit comme comburant dans le four à soufre 10. Le dioxyde de soufre issu dudit four à soufre 10 est oxydé dans le convertisseur catalytique 20, alimenté en oxygène en aval de son premier étage.

Le trioxyde de soufre produit est ensuite absorbé, sur une colonne d'absorption 30, par une solution d'acide sulfurique pour produire de l'acide sulfurique concentré. Les gaz contenant du dioxyde de soufre sont ensuite, après un éventuel traitement, rejetés à l'atmosphère.

La figure 2 illustre le perfectionnement apporté par la présente invention au procédé de l'art antérieur illustré sur la figure 1.

La matière première utilisée est toujours du soufre élémentaire. Comme dans l'art antérieur, ledit soufre alimente un four à soufre 10' pour la production de dioxyde de soufre lors de la première étape. Le dioxyde de soufre est traité dans un convertisseur 20', alimenté en oxygène, au moins au niveau de son premier étage. Le dioxyde de soufre, oxydé en trioxyde de soufre, est ensuite absorbé dans de l'acide sulfurique, dans une colonne d'absorption 30'. Une partie des gaz issus de ladite colonne d'absorption 30' est alors, après un éventuel traitement, rejetée ; la majorité desdits gaz étant recyclée vers le four à soufre 10'. La partie recyclée desdits gaz de rejet est simplement dévésiculée en 16' avant d'être réintroduite dans le four à soufre 10' à titre de comburant.

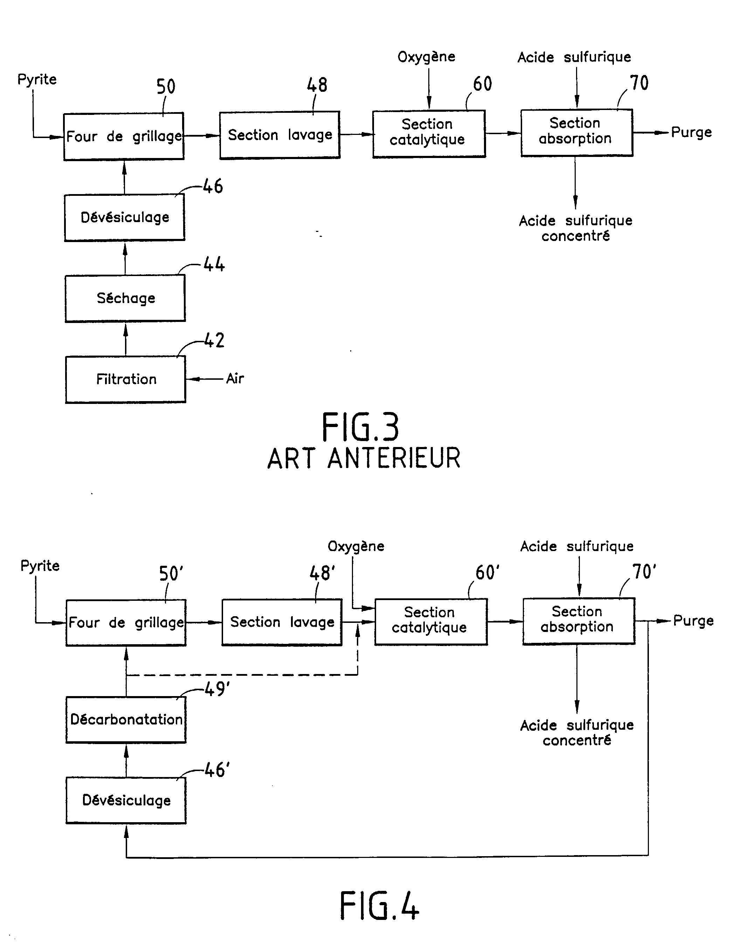

La figure 3 illustre le procédé de l'art antérieur, utilisé pour la production d'acide sulfurique à partir de pyrites (le procédé serait similaire avec, comme matière première soufrée, des minerais sulfurés de métaux non ferreux). Le procédé est quasiment semblable au procédé décrit dans le cas de l'utilisation de soufre élémentaire en tant que matière première soufrée. Toutefois, les pyrites contenant des impuretés, les gaz produits lors de la première étape sont au préalable lavés avant d'être introduits dans le convertisseur catalytique. Le procédé de l'art antérieur selon ladite figure 3 comprend, éventuellement, l'envoi direct d'air filtré, séché et dévésiculé à l'entrée du convertisseur catalytique.

La pyrite est grillée dans un four de grillage 50 alimenté en air préalablement filtré en 42, séché en 44 et dévésiculé en 46. Les gaz résultant du grillage de la pyrite contenant des poussières et des impuretés susceptibles d'empoisonner le catalyseur du convertisseur telles que le mercure, des composés fluorés, du trioxyde de sélénium et d'arsenic, sont donc lavés en 48 avant d'être introduits dans ledit convertisseur 60. De la même façon qu'exposé précédemment, ledit convertisseur catalytique 60 est alimenté en oxygène (en aval de son premier étage) conformément à la technologie décrite dans la demande de brevet FR-A-2 386 479.

Le trioxyde de soufre produit dans ledit convertisseur catalytique 60 est ensuite absorbé dans une solution d'acide sulfurique, dans une colonne d'absorption 70. Les gaz qui contiennent notamment du dioxyde de soufre sont rejetés, après un éventuel traitement, à l'atmosphère.

La figure 4 illustre le perfectionnement selon la présente invention, appliqué au cas de la figure 3.

Comme précédemment exposé, la pyrite est introduite dans le four de grillage 50'. La présente invention consiste à recycler, en régime permanent, une partie des gaz de rejet vers ledit four de grillage 50'.

Les gaz sortant du four de grillage 50' sont lavés en 48' afin d'éliminer impuretés et poussières, puis oxydés dans le convertisseur catalytique 60' (ledit convertisseur catalytique 60' est alimenté en oxygène au moins au niveau de son premier étage). Le trioxyde de soufre ainsi produit est absorbé sur une colonne d'absorption 70'. Les gaz sortant de la colonne d'absorption 70' sont en majorité recyclés vers le four de grillage 50'. Ces gaz sont secs, comme cela a été expliqué précédemment et sont donc simplement dévésiculés en 46'. Etant donné que ces gaz sont susceptibles de contenir du dioxyde de carbone, ils sont également avantageusement décarbonatés en 49', l'accumulation de dioxyde de carbone dans la boucle de recyclage conduisant à des teneurs en dioxyde de carbone risquant de dégrader l'activité du catalyseur.

On a indiqué, sur ladite figure 4, la mise en oeuvre éventuelle (avantageuse) d'un recyclage, à l'entrée du convertisseur catalytique 60', de gaz de rejet prélevés sur le circuit de recyclage principal (vers le four à soufre 50'), en aval des unités de dévésiculage 46' et de décarbonation 49'.

Le procédé selon l'invention vient d'être décrit en référence aux figures annexées dans le cas de procédés de contact dits secs; il est évidemment applicable, comme déjà indiqué, de la même façon aux procédés dits humides.

L'invention et son art antérieur sont maintenant illustrés par les exemples ci-après. A la considération desdits exemples, l'homme du métier ne manquera pas de saisir l'intérêt de ladite invention.

Une étude a été réalisée sur une unité produisant de l'acide sulfurique à partir de soufre élémentaire selon un procédé de contact dit sec. L'unité de référence est décrite de façon détaillée dans le paragraphe suivant, c'est une unité à simple absorption. Les cas suivants ont été étudiés et comparés :
A. Fonctionnement classique de l'unité de référence (unité à simple absorption, sans injection d'oxygène dans le convertisseur catalytique);
B. Fonctionnement de l'unité de référence à laquelle, une colonne d'absorption intermédiaire a été ajoutée entre le troisième et le quatrième lit catalytique du convertisseur afin d'absorber le trioxyde de soufre contenu dans le gaz issu du troisième étage (l'unité de référence est alors transformée en unité à double absorption);
C. Fonctionnement de l'unité de référence avec injection d'oxygène à l'alimentation du premier lit;
D.Fonctionnement, selon une variante optimisée du procédé de l'invention, de l'unité de référence modifiée selon la présente invention (injection d'oxygène au premier étage du convertisseur, optimisation des températures d'alimentation à chaque étage catalytique, recyclage d'une partie des gaz de rejet au four à soufre, suppression de l'air de combustion alimentant ledit four à soufre selon l'art antérieur, suppression de l'étape de séchage dudit air);
E. Fonctionnement, selon D, de l'unité de référence modifiée selon la présente invention en supprimant le quatrième lit catalytique;
F. Fonctionnement, selon D, de l'unité de référence modifiée selon la présente invention en supprimant les troisième et quatrième lits catalytiques.

### 1. Description de l'unité de référence étudiée

Le convertisseur catalytique et la section d'absorption ont été dimensionnés initialement pour traiter un gaz provenant d'un four à soufre.

Ce dernier est alimenté par de l'air provenant d'une soufflante et par du soufre à l'état liquide. La soufflante qui alimente en air l'unité d'acide a été dimensionnée pour comprimer 85 000 Nm³/h d'air (ce qui correspond à une production d'acide de 600 t/j) ; ce dernier est aspiré à température ambiante pour être refoulé à 63°C. Quand le convertisseur fonctionne avec du catalyseur neuf (c'est-à-dire avec pertes de charge minimales), la pression de refoulement de la soufflante est 1,46 bar. Cette soufflante est entraînée par une turbine à vapeur dans laquelle est détendue de la vapeur 23 bar à 2,3 bar. L'air est ensuite séché à contre-courant par de l'acide sulfurique à 77°C dans une colonne de séchage, la perte de charge dans cette colonne est de 0,03 bar pour le débit nominal d'air et la température de sortie est de 77°C. Il alimente le four à soufre à 77°C et sous 1,43 bar. Le débit nominal de soufre liquide, correspondant à une production d'acide de 600 t/j, alimentant le brûleur est de 8,75 t/h. La température d'alimentation du soufre liquide dans le four est de 140°C. Le temps de séjour dans le four à soufre est de 2s et les pertes de charge de 0,02 bar. Le gaz produit contient 10% mol. de dioxyde de soufre et est à une température de 1130 °C.

La chaudière située en aval du four à soufre a été dimensionnée pour refroidir 55000 Nm³/h de gaz de 1100°C à 500°C tout en produisant 26t/h de vapeur saturée 23 bar. Les pertes de charge dans la chaudière, pour le débit nominal de gaz, sont de 0,03 bar. Dans le cas où le convertisseur fonctionne avec du catalyseur neuf, le gaz qui quitte la chaudière est à 500°C et sous 1,39 bar et contient entre 10 et 13% mol. de dioxyde de soufre.

Le convertisseur catalytique est constitué de quatre lits successifs dont les principales caractéristiques sont rassemblées dans le tableau 1 ci-après. Le catalyseur utilisé est un catalyseur classique composé de pentoxyde de vanadium déposé sur un support en alumine. Dans les deux premiers lits, ce catalyseur est un extrudé dont le diamètre équivalent (diamètre de la sphère de même volume) est 0,006 m, tandis que le catalyseur utilisé dans les troisième et quatrième lits présente un diamètre équivalent de 0,004 m. Pour chacun des lits, la densité apparente est de 600 kg/m³, la densité réelle des particules de catalyseur est de 900 kg/m³.

Le tableau 1 ci-après rassemble les principales caractéristiques des lits et en particulier leurs pertes de charge respectives en fonctionnement nominal.

**Tableau 1 :**

| Caractéristiques du réacteur catalytique de l'unité étudiée | | | |
|---|---|---|---|
| Lits | Volume (m³) | Masse de catalyseur (t) | Pertes de charge (bar) |
| 1 | 20 | 12 | 0,010 |
| 2 | 33 | 19,8 | 0,017 |
| 3 | 43,5 | 26,1 | 0,045 |
| 4 | 43,5 | 26,1 | 0,048 |

Un évaporateur et des surchauffeurs de vapeur d'eau sont respectivement situés entre les premier et deuxième lits catalytiques, entre les deuxième et troisième et entre les troisième et quatrième lits catalytiques. Les pertes de charge du gaz circulant dans l'évaporateur sont de 0,03 bar dans les conditions nominales.

L'économiseur situé en aval du convertisseur et qui refroidit les gaz avant l'étape d'absorption présente les caractéristiques suivantes: chauffage d'eau de 105°C à 222°C (pression d'alimentation de l'eau: 30 bar, pression de sortie 23 bar), vaporisation d'eau en vapeur saturée 23 bar. Les pertes de charge coté gaz sont estimées à 0,04 bar dans les conditions nominales et les gaz en sortie sont à 215°C.

Le gaz ainsi refroidi est absorbé dans une colonne à contre-courant par de l'acide sulfurique afin de former de l'acide sulfurique concentré. Les gaz en sortie de colonne sont à 75°C et les pertes de charge dans la colonne sont mesurées à 0,07 bar. Ce flux gazeux est ensuite rejeté à l'atmosphère. L'acide qui alimente la colonne est à 77°C et il est réchauffé jusqu'à 116°C au cours de l'absorption; en marche nominale, son débit est 910 t/h et sa concentration massique à l'entrée de 98,5 %. Cette section consomme 5,25 t/h d'eau de procédé destinée à diluer l'acide fortement concentré ce qui réchauffe l'acide de 10°C. L'acide est ensuite refroidi à 40°C avant le stockage par une partie de l'eau destinée à la production de vapeur .

### 2. Comparaison des cas A, B, C, D, E et F.

Dans chacun des cas étudiés, les contraintes à satisfaire sont :
- la température de sortie de chaque lit catalytique doit être inférieure à 610°C (limite de stabilité de l'activité du catalyseur),
- la température d'alimentation de chaque lit catalytique doit être supérieure à 380°C (température minimale d'activation du catalyseur),
- la conversion globale du soufre en trioxyde de soufre dans l'unité doit être maximisée,
- la température de sortie du four à soufre est limitée à 1100°C,
- l'excès d'oxygène par rapport à la stoechiométrie à l'entrée du four à soufre est fixé au moins à 50% (valeur minimale utilisée à l'heure actuelle dans l'industrie).

Le tableau 2 ci-après compare les performances des cas étudiés. Le rendement en trioxyde de soufre correspond au rapport du débit molaire de trioxyde de soufre produit par l'unité divisé par le débit molaire de soufre consommé par l'unité. La conversion de l'oxygène est calculée en tenant compte d'une part, de l'oxygène provenant de l'air de combustion (cas A, B et C), et d'autre part, de l'oxygène injecté au premier lit de catalyseur (cas C, D, E et F). Le taux de recyclage est la fraction des gaz issus de la tour d'absorption finale qui est recyclée vers le four à soufre. P_{compression} correspond à la puissance développée par la soufflante d'air dans les cas A, B et C et à la puissance développée par le compresseur de recyclage dans les autres cas. Le gaz de rejet est le gaz effectivement rejeté à l'atmosphère.

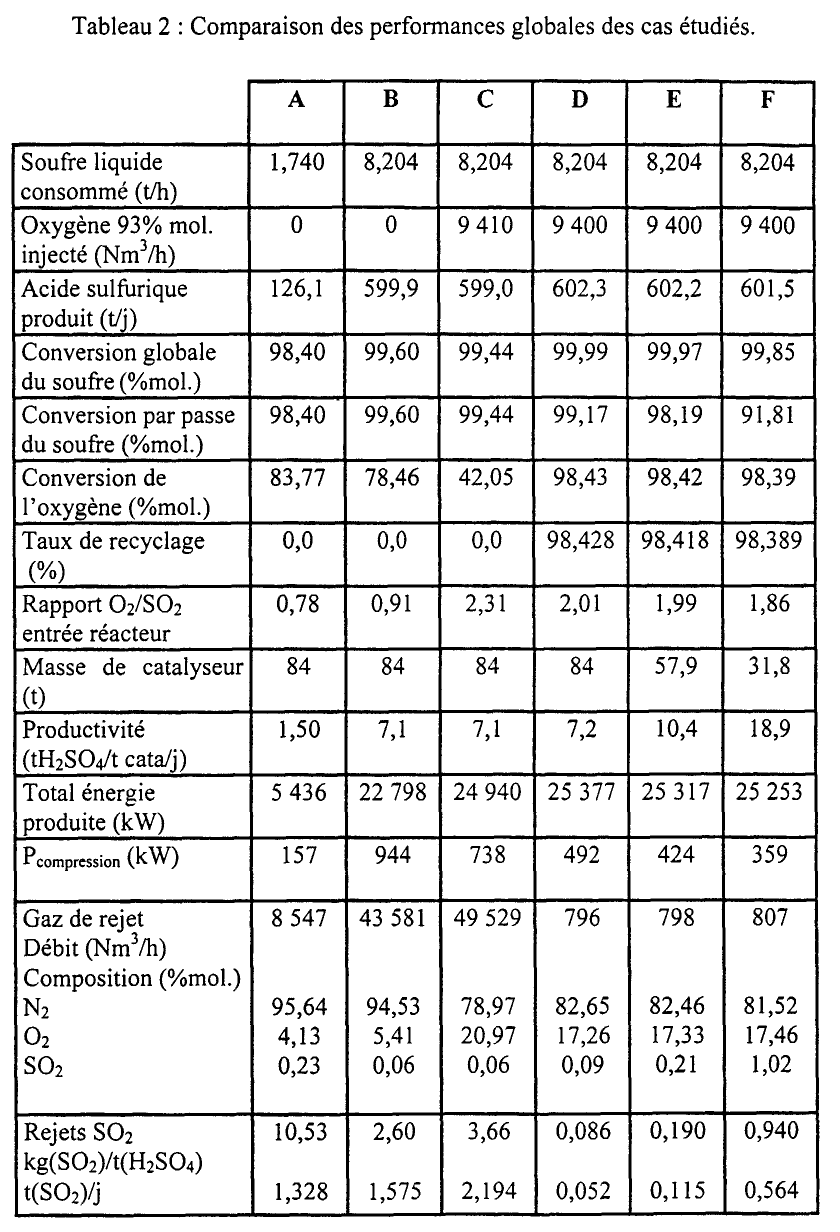

Les tableaux 3 et 4 ci-après comparent respectivement les paramètres opératoires et les performances du four à soufre et de la section catalytique de chacun des six cas étudiés.

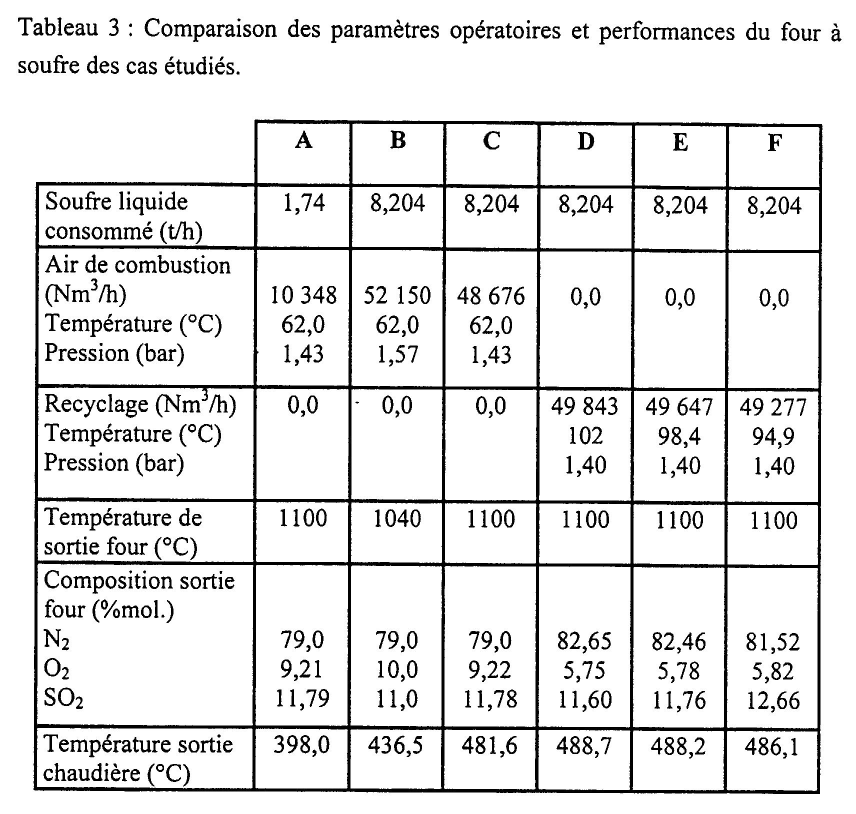

La composition des gaz recyclés dans les cas D, E et F, présentée dans le tableau 3 ci-dessus est la même que celle des gaz de rejet présentée dans le tableau 2. La conversion listée pour chaque étage catalytique est une conversion cumulée, elle est calculée sur la base du débit partiel de dioxyde de soufre alimentant le premier étage.

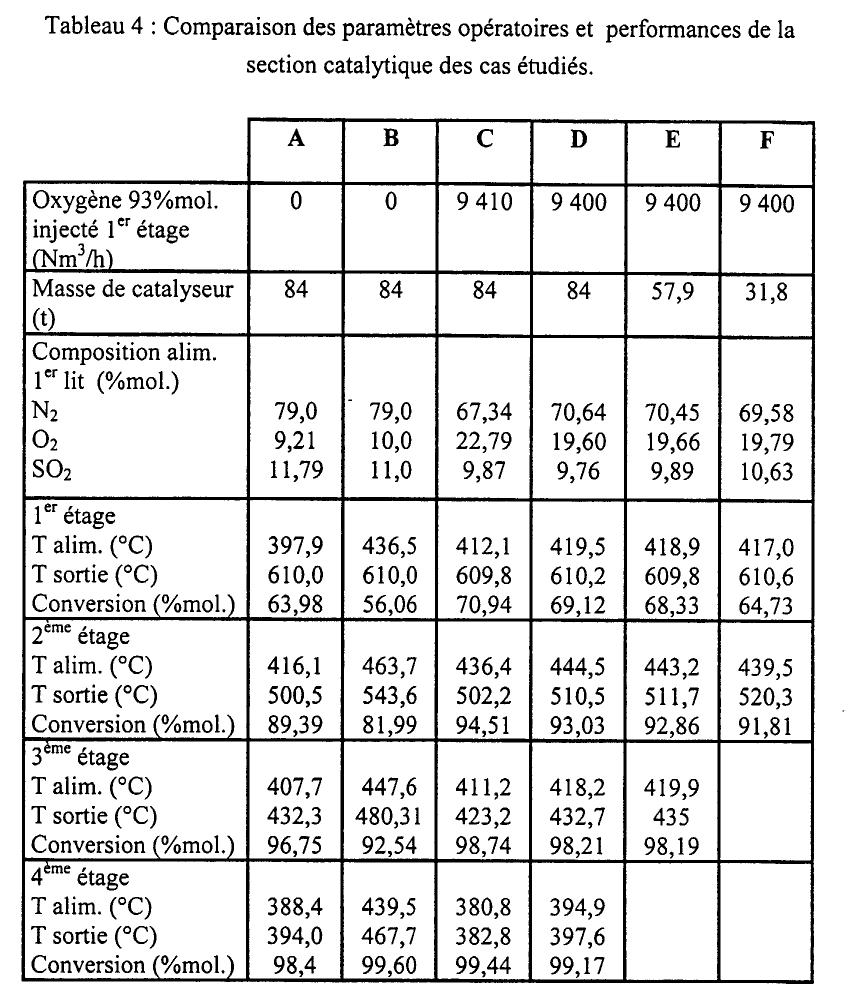

Le très fort excès d'oxygène à l'entrée du premier lit catalytique n'est pas préjudiciable à l'activité du catalyseur. Par contre, du dioxyde de soufre en excès par rapport à la stoechiométrie peut faire décliner son activité. Cette désactivation est réversible si le catalyseur est par la suite immergé dans un milieu contenant de l'oxygène en excès par rapport à la stoechiométrie. L'excès d'oxygène est donc plutôt positif.

Dans les cas A, B et C avec du catalyseur neuf dans le réacteur catalytique, 20 ppm de dioxyde d'azote sont produits en sortie du four à soufre alors que dans les cas D, E et F, compte tenu du taux de recyclage, l'accumulation en dioxyde d'azote dans la boucle de recyclage reste inférieure à 2000ppm, teneur qui n'est pas assez élevée pour dégrader l'activité du catalyseur.

## Revendications

1. Procédé de production d'acide sulfurique, comprenant :
- une première étape de production de dioxyde de soufre à partir d'une matière première soufrée et d'un comburant ;
- une seconde étape d'oxydation catalytique dudit dioxyde de soufre en trioxyde de soufre dans un convertisseur catalytique (20' ; 60') alimenté en oxygène ;
- une troisième étape d'obtention d'acide sulfurique à partir dudit trioxyde de soufre, ladite troisième étape produisant, outre ledit acide sulfurique, des gaz de rejet ;
caractérisé en ce que l'on recycle une partie au moins desdits gaz de rejet dans le comburant utilisé lors de ladite première étape de production de dioxyde de soufre.

2. Procédé de production d'acide sulfurique selon la revendication 1, caractérisé en ce que ledit convertisseur catalytique (20'; 60') comprend au moins deux étages et en ce qu'il est alimenté en oxygène, au moins en partie, au niveau du premier desdits étages.

3. Procédé de production d'acide sulfurique selon l'une des revendications 1 ou 2, caractérisé en ce que la plus grande partie du comburant, et de préférence la totalité, utilisé dans ladite première étape de production de dioxyde de soufre est constituée de gaz de rejet.

4. Procédé de production d'acide sulfurique selon l'une quelconque des revendications 1 à 3, caractérisé en ce que ledit convertisseur catalytique (20' ; 60') est alimenté avec un oxygène qui contient de 1% à 10% de gaz inerte en volume, de préférence de l'azote et/ou de l'argon.

5. Procédé de production d'acide sulfurique selon l'une quelconque des revendications 1 à 4, caractérisé en ce que ladite partie recyclée desdits gaz de rejet est dévésiculée avant son utilisation dans ladite première étape de production de dioxyde de soufre.

6. Procédé de production d'acide sulfurique selon l'une quelconque des revendications 1 à 5, caractérisé en ce que ladite matière première soufrée est choisie parmi le soufre élémentaire, les pyrites et les minerais sulfurés de métaux non ferreux et en ce que, au cours de ladite troisième étape, l'acide sulfurique est obtenu par absorption.

7. Procédé de production d'acide sulfurique selon l'une quelconque des revendications 1 à 5, caractérisé en ce que ladite matière première soufrée est choisie parmi les gaz chargés en hydrogène sulfuré, les sulfates, les acides résiduaires et les gaz de combustion de combustibles fossiles sulfureux et en ce que, au cours de ladite troisième étape, l'acide sulfurique est obtenu par condensation.

8. Procédé de production d'acide sulfurique selon l'une quelconque des revendications 1 à 7, caractérisé en ce que ladite matière première soufrée est choisie parmi les pyrites, les minerais sulfurés de métaux non ferreux, les sulfates, les acides résiduaires, les gaz chargés en hydrogène sulfuré et les gaz de combustion de combustibles fossiles sulfureux, en ce que le gaz issu de ladite première étape, chargé en dioxyde de soufre, est lavé avant son introduction dans ledit convertisseur catalytique (20'; 60') et en ce que la partie recyclée desdits gaz de rejet est décarbonatée avant son utilisation dans ladite première étape.

9. Procédé de production d'acide sulfurique selon la revendication 8, caractérisé en ce que ladite partie recyclée desdits gaz de rejet est tout d'abord dévésiculée puis ensuite décarbonatée, avant son utilisation dans ladite première étape.

10. Procédé de production d'acide sulfurique selon l'une quelconque des revendications 1 à 9, caractérisé en ce que l'on recycle une partie desdits gaz de rejet à l'entrée du convertisseur catalytique (20' ; 60'); ladite partie étant avantageusement prélevée sur la partie desdits gaz de rejet recyclée vers ladite première étape de production de dioxyde de soufre, de préférence après le dévésiculage voire le dévésiculage et la décarbonation de ladite partie desdits gaz de rejet recyclée vers ladite première étape.

11. Procédé de production d'acide sulfurique selon l'une quelconque des revendications 1 à 10, caractérisé en ce que ledit convertisseur catalytique (20' ; 60') comporte au moins deux étages, et en ce que, entre chaque étage dudit convertisseur (20'; 60'), les gaz réactionnels sont, avant leur introduction dans l'étage suivant, refroidis de 3°C à 50°C par rapport aux conditions de température qui seraient obtenues, sans introduction d'oxygène, pour une même production d'acide sulfurique.

12. Dispositif convenant pour la production d'acide sulfurique, comprenant en ligne :
- une unité de production (10' ; 50') de dioxyde de soufre à partir d'une matière première soufrée et d'un comburant ;
- un convertisseur catalytique (20'; 60') dudit dioxyde de soufre en trioxyde de soufre équipé de moyens pour son alimentation en oxygène ; et
- une unité de préparation (30'; 70') dudit acide sulfurique à partir dudit trioxyde de soufre ;
caractérisé en ce qu'il comporte en outre des moyens pour recycler une partie des gaz de rejet au sortir de ladite unité de préparation (30'; 70') dudit acide sulfurique, vers ladite unité de production (10' ; 50') de dioxyde de soufre.

13. Dispositif convenant pour la production d'acide sulfurique selon la revendication 12, caractérisé en ce que lesdits moyens de recyclage d'une partie desdits gaz de rejet sont associés à une unité de dévésiculage (16' ; 46') desdits gaz et éventuellement, si nécessaire, à une unité de décarbonatation (49') desdits gaz ; ladite unité de décarbonatation (49') intervenant avantageusement en aval de ladite unité de dévésiculage (46') desdits gaz.

14. Dispositif selon l'une des revendications 12 ou 13, caractérisé en ce que ladite unité de préparation (30'; 70') dudit acide sulfurique à partir dudit trioxyde de soufre, consiste en une unité d'absorption ou une unité de condensation.
